# EUROPÄISCHE PATENTSCHRIFT

(11) **EP 0 566 763 B1**
(45) Veröffentlichungstag und Bekanntmachung des Hinweises auf die Patenterteilung: **22.11.1995**
(21) Anmeldenummer: 92106936.5
(22) Anmeldetag: 23.04.1992
(51) Int. Cl.: B23Q 3/155

(54) **Verfahren zum Wechseln von Werkzeugen an einer Einspindelwerkzeugmaschine sowie Vorrichtung zur Durchführung des Verfahrens**
Process and device for changing tools in a single spindle machine tool
Procédé et dispositif pour le changement d'outil dans une machine-outil monobroche

(43) Veröffentlichungstag der Anmeldung: 27.10.1993
(73) Patentinhaber: Alfing Kessler Sondermaschinen GmbH, D-73413 Aalen (DE)
(72) Erfinder: Wieland, Wolfgang, W-7099 Adelmannsfelden (DE); Ohrnberger, Volker, W-7534 Birkenfeld (DE)
(74) Vertreter: Kohlmann, Karl Friedrich, Dipl.-Ing.

(56) Entgegenhaltungen:
- DE-A- 2 239 774
- JP-A-58 186 544
- PATENT ABSTRACTS OF JAPAN vol. 8, no. 28 (M-274)(1465) 7. Februar 1984

## Beschreibung

Die vorliegende Erfindung betrifft ein Verfahren zum Wechseln von Werkzeugen an einer Einspindelwerkzeugmaschine, insbesondere zum Einsatz an einer Transfermaschine, bei dem die neuen Werkzeuge in einem seitlich dicht neben dem die Arbeitsspindel tragenden Fahrständer der Werkzeugmaschine angeordneten Werkzeugmagazin mit etwa senkrecht zur Spindelachse ausgerichteter Werkzeugachse in horizontaler Lage gehalten, aus dieser Position heraus in die Spindel eingesetzt und nach erfolgtem Bearbeitungseinsatz als gebrauchte Werkzeuge wieder in dem Werkzeugmagazin abgelegt werden.

Die vorliegende Erfindung betrifft ferner eine Vorrichtung zur Durchführung des Verfahrens.

Einspindelwerkzeugmaschinen der hier zur Diskussion stehenden Gattung sind als sogenannte Dreiachseinheit ausgebildet, d.h. als eine Einheit, deren Arbeitsspindel in X-, Y- und Z-Richtung bewegbar ist.

Derartige Einspindelwerkzeugmaschinen werden in der Technik mit den verschiedensten Werkzeugwechseleinrichtungen ausgestattet. Allen Werkzeugwechseleinrichtungen ist dabei gemeinsam, daß sie neben dem eigentlichen Werkzeugmagazin, welches zum einen die neuen und zum anderen die gebrauchten Werkzeuge aufnimmt, in jedem Fall einen sogenannten "Wechsler" besitzen, der das Bindeglied zwischen der Arbeitsspindel und dem Werkzeugmagazin darstellt, d.h. die gebrauchten Werkzeuge aus der Arbeitsspindel entnimmt und in dem Werkzeugmagazin ablegt bzw. die neuen Werkzeuge aus dem Werkzeugmagazin entnimmt und der Arbeitsspindel zuführt (vgl. beispielsweise "Werkzeugmaschinen", Weck Manfred, VDI-Verlag, 1. Aufl. 1978, Seiten 364 u. 365, das als nächstkommender Stand der Technik angesehen wird).

Derartige Wechsler sind technisch und insbesondere steuerungsmäßig relativ aufwendig, benötigen zusätzlichen Raum und verteuern die Konstruktion jeder Werkzeugwechseleinrichtung.

Zwar sind bereits Werkzeugwechseleinrichtungen bekannt (vgl. Hüller Hille nb-h 70), die ohne sogenannte Wechsler auskommen und bei denen die neuen und die gebrauchten Werkzeuge durch die Dreiachseinheit im sogenannten "Pick-up-Verfahren" aus den Werkzeugmagazin entnommen bzw. in diesem wieder abgelegt werden. Derartige Werkzeugwechseleinrichtungen bauen jedoch aufgrund des ausladend zu beiden Seiten angeordneten scheibenförmigen Werkzeugmagazines sehr breit und sind daher zum Einsatz an Einspindelwerkzeugmaschinen für Transferstraßen oder auch sonst zum Einsatz unter beengten Platzverhältnissen nicht geeignet.

Bei einer bewährten und bereits seit langem gebräuchlichen Konstruktion ist die Werkzeugwechseleinrichtung in Form eines sogenannten Kettenspeichers ausgebildet, der um die Dreiachseinheit herumgebaut ist (vgl. Prospekt Alfing; Fertigungseinheit HFE 45 CNC). Wegen des geringen seitlichen Platzbedarfes eignen sich derartige Konstruktionen insbesondere zum Einsatz an Transfermaschinen oder bei beengten Platzverhältnissen. Allerdings muß bei derartigen Konstruktionen die Masse der Werkzeugwechseleinrichtung einschließlich der Masse der gebrauchten und der neuen Werkzeuge zusammen mit der Dreiachseinheit in X-, Y- und Z-Richtung bewegt werden, was hinsichtlich der Bewegungsgeschwindigkeit in diesen Achsen Grenzen setzt. Darüber hinaus benötigt diese bekannte und bewährte Werkzeugwechseleinrichtung ebenfalls einen sogenannten Wechsler, mit dem die Werkzeuge aus dem Kettenspeicher in den Bereich der Arbeitsspindel und zurück verbracht werden können.

Aufgabe der vorliegenden Erfindung ist es, eine neuartige Verfahrensweise zum Wechseln von Werkzeugen und eine neuartige Vorrichtung zur Durchführung des Verfahrens zu schaffen, die sich zum Einsatz unter beengten seitlichen Platzverhältnissen, insbesondere an Transfermaschinen eignet, mit einfachen technischen Mitteln realisierbar ist und hohe Wechselgeschwindigkeiten ermöglicht.

Diese Aufgabe wird erfindungsgemäß dadurch gelöst, daß das Werkzeugmagazin aus seiner Stellung seitlich neben dem Fahrständer in eine Wechselstellung vor der Arbeitsspindel verschwenkt und im Pick-up-Verfahren durch die Arbeitsspindel unmittelbar das neue Werkzeug aus dem Werkzeugmagazin entnommen bzw. das gebrauchte Werkzeug in das Werkzeugmagazin abgelegt wird.

Der Erfindung liegt der Gedanke zugrunde, das seitlich dicht neben dem Fahrständer und damit sehr raumsparend angeordnete Werkzeugmagazin derart auszubilden, daß es zum Werkzeugwechsel vor die Arbeitsspindel geschwenkt werden kann und damit das Entnehmen der neuen und Rückführen der gebrauchten Werkzeuge im bekannten und bewährten Pick-up-Verfahren möglich ist. Auf diese Weise kann die Anordnung eines aufwendigen Wechslers entfallen. Auch spielt die Masse der Werkzeugwechseleinrichtung einschließlich der Masse der gebrauchten und der neuen Werkzeuge aufgrund der getrennten Anordnung für die Dreiachseinheit keine Rolle, was sich hinsichtlich der Bewegungsgeschwindigkeit der Dreiachseinheit positiv auswirkt.

Die erfindungsgemäße Verfahrensweise ermöglicht die Schaffung eines Wechselsystemes in Form einer selbständigen Einheit. Somit können Einspindelwerkzeugmaschinen ohne weiteres auch zu einem späteren Zeitpunkt mit einer nach dem erfindungsgemäßen Verfahren arbeitenden Vorrichtung nachgerüstet werden.

Aufgrund der Gestaltung als selbständige Einheit ergibt sich auch eine kompakte Bauweise, die im Bedarfsfalle mit einfachen technischen Mitteln optimal gekapselt werden kann.

Grundsätzlich kann das Werkzeugmagazin aus seiner Stellung seitlich neben dem Fahrständer in die Wechselstellung in verschiedenster Weise verschwenkt werden. Eine besonders vorteilhafte Ausgestaltung ergibt sich jedoch dann, wenn das Werkzeugmagazin aus seiner Stellung seitlich neben dem Fahrständer in die Wechselstellung vor der Arbeitsspindel um zwei im Abstand voneinander angeordnete, vertikal ausgerichtete Achsen verschwenkt wird, welche in der Stellung seitlich neben dem Fahrständer in einer zur Spindelachse etwa parallelen und in der Wechselstellung in einer zur Spindelachse senkrechten, jeweils vertikalen Ebene verlaufen.

Eine besonders einfache technische Realisierung ist bei einer derartigen Verfahrensweise dann möglich, wenn bei der Verschwenkbewegung in Richtung der Wechselstellung die hintere Schwenkachse des Werkzeugmagazines eine geradlinige, etwa parallel zur Spindelachse verlaufende Bewegung und die vordere Schwenkachse eine bogenförmige Bewegung beschreibt.

Grundsätzlich kann die bogenförmige Bewegung dem jeweiligen Anwendungszweck entsprechend jede beliebige Form aufweisen. Vorteilhaft ist es jedoch, wenn die bogenförmige Bewegung der vorderen Schwenkachse auf einem Kreisbogen verläuft, dessen Mittelpunkt auf der der Arbeitsspindel entgegengesetzten Seite einer Ebene liegt, die durch die Schwenkachsen in deren Stellung seitlich neben dem Fahrständer definiert ist.

Bei Vorrichtungen zur Durchführung des Verfahrens ist es vorteilhaft, eine Schwenkanordnung vorzusehen, mit der das Werkzeugmagazin aus seiner seitlich dicht neben dem Fahrständer angeordneten Stellung in die Wechselstellung vor der Arbeitsspindel und zurück verschwenkt werden kann. Derartige Schwenkanordnungen können dem jeweiligen Anwendungszweck entsprechend in der verschiedensten Weise ausgestaltet sein. Vorteilhaft ist es, wenn die Schwenkanordnung eine das Werkzeugmagazin tragende Schwenkplatte umfaßt, die Lageranordnungen für die im Abstand voneinander angeordneten, vertikal ausgerichteten Schwenkachsen aufweist, die jeweils mit einer Führungsanordnung in Verbindung stehen. Die Führungsanordnungen können dabei in verschiedenster Weise gestaltet sein.

Eine technisch besonders einfach aufgebaute und auch bei hohen Geschwindigkeiten zuverlässig arbeitende Führungsanordnung ist dann gegeben, wenn die Schwenkplatte mit ihrer hinteren Lageranordnung für die hintere Schwenkachse in einem Magazinschlitten gelagert ist, der auf einer etwa parallel zur Spindelachse ausgerichteten Linearführung horizontal hin- und herverschiebbar ist, und wenn die vordere Lageranordnung für die vordere Schwenkachse an das eine Ende eines Schwenkhebels angekoppelt ist, dessen anderes Ende gestellfest auf der der Arbeitsspindel entgegengesetzten Seite einer Ebene gelagert ist, die durch die Schwenkachsen in deren Stellung seitlich neben dem Fahrständer definiert ist.

Durch die Wahl der Lage der Drehachse des anderen Endes des Schwenkhebels und die Wahl der Länge des Schwenkhebels können die verschiedensten Bewegungsbahnen für die Schwenkplatte und damit für das Werkzeugmagazin realisiert werden. Eine Möglichkeit besteht beispielsweise darin, daß die Drehachse der Lagerung des anderen Endes des Schwenkhebels in eine vertikale Ebene gelegt wird, die durch die Winkelhalbierende derjenigen beiden Ebenen verläuft, die durch die Schwenkachsen zum einen in der Stellung seitlich neben dem Fahrständer und zum anderen in der Wechselstellung gebildet werden.

Grundsätzlich kann das Werkzeugmagazin in verschiedenster Weise ausgebildet sein. Eine im vorliegenden Fall besonders vorteilhafte Ausgestaltung ergibt sich jedoch, wenn das Werkzeugmagazin als Magazinscheibe ausgebildet ist, die an der Schwenkplatte um eine horizontale Achse drehbar gelagert ist. Das Werkzeugmagazin kann jedoch auch als Magazinkammplatte ausgebildet sein, die an der Schwenkplatte vorzugsweise lösbar befestigt ist.

Zur Durchführung der Verschiebebewegung des Magazinschlittens eignen sich die verschiedensten Antriebe. Einen besonders einfachen und im vorliegenden Fall zwechmäßigen Antrieb stellt jedoch die Anordnung eines Kurbelantriebes dar. Vorteilhaft ist es, wenn der Kurbelantrieb eine Schubstange umfaßt, die mit ihrem einen Ende an dem Magazinschlitten und mit ihrem anderen Ende an einer über einen Stellmotor angetriebenen Kurbelscheibe angelenkt ist.

Bei einem bevorzugten Ausführungsbeispiel der vorliegenden Erfindung ist die Kurbelscheibe als mit mindestens einer Führungsnut ausgestattete Kurvenscheibe ausgebildet. Über eine derartige Kurvenscheibe lassen sich mit dem Antrieb für den Magazinschlitten auf einfache Weise weitere Bewegungsvorgänge auf einfache Weise absolut synchron realisieren. So kann beispielsweise in die Führungsnut ein Kulissenstein eingreifen, der über eine Hebelanordnung auf eine oder mehrere Schutzeinrichtungen, wie Schutztüren oder Schutzklappen oder dergleichen einwirkt. Derartige Schutzeinrichtungen sind erforderlich, um die Bedienungsperson vor rotierenden Teilen zu schützen und den Zugang zum Werkzeugmagazin nur in denjenigen Arbeitsphasen freizugeben, in denen für die Bedienungsperson keine Gefahr besteht.

Durch die Schutzeinrichtungen kann darüber hinaus die gesamte Werkzeugwechseleinrichtung gegenüber Schmier- oder Kühlmitteleinflüssen geschützt werden.

Grundsätzlich kann der Magazinschlitten in verschiedenster Weise gelagert werden. Eine besonders einfache Lagerung ergibt sich, wenn eine Linearführung vorgesehen wird, die zwei vertikal übereinander und etwa parallel zur Spindelachse verlaufende Führungsschienen aufweist, auf denen Lagerblöcke verschiebbar sind, die an der Schwenkplatte befestigt sind.

Im folgenden ist zum besseren Verständnis und zur weiteren Erläuterung der Erfindung eine nach dem erfindungsgemäßen Verfahren arbeitende Vorrichtung zum Wechseln von Werkzeugen in zwei Ausführungsbeispielen unter Bezugnahme auf die beigefügten Zeichnungen näher beschrieben.
- Figur 1: zeigt schematisch in einer perspektivischen Gesamtansicht eine für den Einsatz an einer Transfermaschine vorgesehen Einspindelwerkzeugmaschine, welche mit einem ersten Ausführungsbeispiel einer erfindungsgemäßen Vorrichtung zur Durchführung des erfindungsgemäßen Verfahrens ausgestattet ist.
- Figur 2: zeigt schematisch eine Seitenansicht des ersten Ausführungsbeispiels der Vorrichtung gemäß Figur 1.
- Figur 3: zeigt ein zweites Ausführungsbeispiel der erfindungsgemäßen Vorrichtung in einer der Figur 2 entsprechenden Seitenansicht.
- Figur 4: zeigt schematisch eine Draufsicht auf das zweite Ausführungsbeispiel gemäß Figur 3 in einer Ausgangsstellung.
- Figur 5: zeigt in einer der Figur 4 entsprechenden Draufsicht die erfindungsgemäße Vorrichtung in einer Wechselstellung, und
- Figur 6: zeigt zur Verdeutlichung der Bewegungs- und Hebelverhältnisse in einer den Figuren 4 und 5 entsprechenden Draufsicht die wichtigsten Elemente einer erfindungsgemäßen Schwenkanordnung.

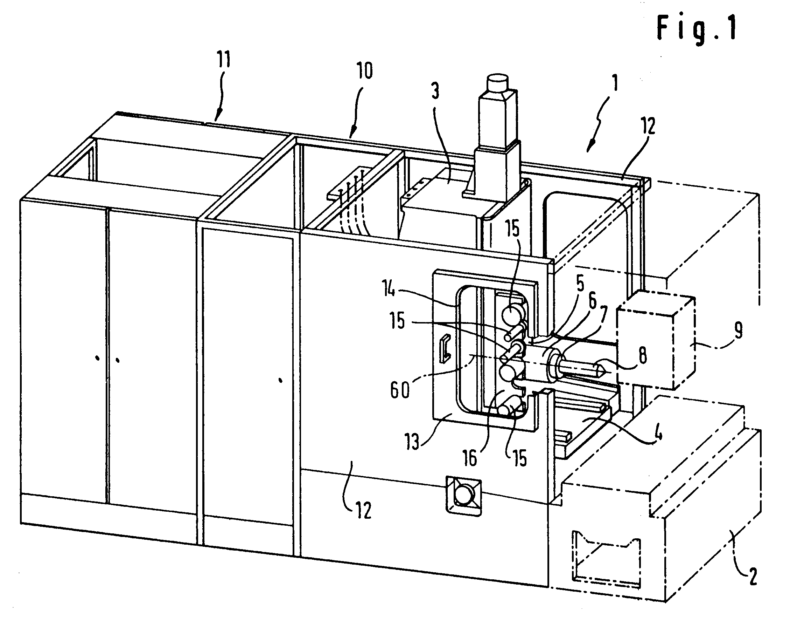

Wie aus Figur 1 hervorgeht, ist die Einspindelwerkzeugmaschine 1 zum Einsatz an einer Transfermaschine eingerichtet, von der der besseren Übersichtlichkeit halber lediglich die zugeordneten Mitteneinheit 2 mit strichtpunktierten Linien angedeutet ist.

Die Einspindelwerkzeugmaschine 1 umfaßt einen Fahrständer 3, der in bekannter Weise auf einer Führung 4 in Y-Richtung hin- und herverfahrbar ist.

Der Fahrständer 3 weist einen Spindelschlitten 5 auf, der in herkömmlicher Weise mit einem Spindeleinschub 6 ausgestattet ist, welcher eine Arbeitsspindel 7 trägt, in die ein Werkzeug 8 eingespannt ist.

Die Anordnung ist dabei in bekannter Weise derart getroffen, daß die Einspindelwerkzeugmaschine 1 als sogenannte Dreiachseinheit ausgebildet ist, d.h. als eine Einheit, deren Arbeitsspindel 7 nicht nur durch die Führung 4 in Y-Richtung, sondern darüber hinaus auch in X- und Z-Richtung bewegbar ist.

Das in Figur 1 in die Arbeitsspindel 7 eingespannte Werkzeug 8 der Einachseinheit kann in einem genau festgelegten Bereich zur Durchführung der Bearbeitungsvorgänge bewegt werden. Dieser Bereich, allgemein als Arbeitsraum bezeichnet, ist in Figur 1 mit dem Bezugszeichen 9 kenntlich gemacht.

In bezug auf die Mitteneinheit 2 ist hinter dem Fahrständer 3 ein Servicegang 10 angeordnet. Hinter dem Servicegang 10 befindet sich ein elektrischer Schaltschrank 11, welcher die Elemente für die Stromversorgung, die Steuerung und dergleichen beinhaltet.

Sowohl der Arbeitsraum des Fahrständers 3 als auch der Servicegang 10 und der Schaltschrank 11 sind jeweils mit einer Verkleidung 12 versehen, die in der üblichen Weise mit Zugangs-, Bestückungs- und Schutztüren ausgestattet ist.

Die Verkleidung 12 im Bereich des Fahrständers 3 schließt den Arbeitsraum 9 gegenüber dem Außenraum ab. Sie besitzt eine Bestückungstür 13, auf die später noch eingegangen wird.

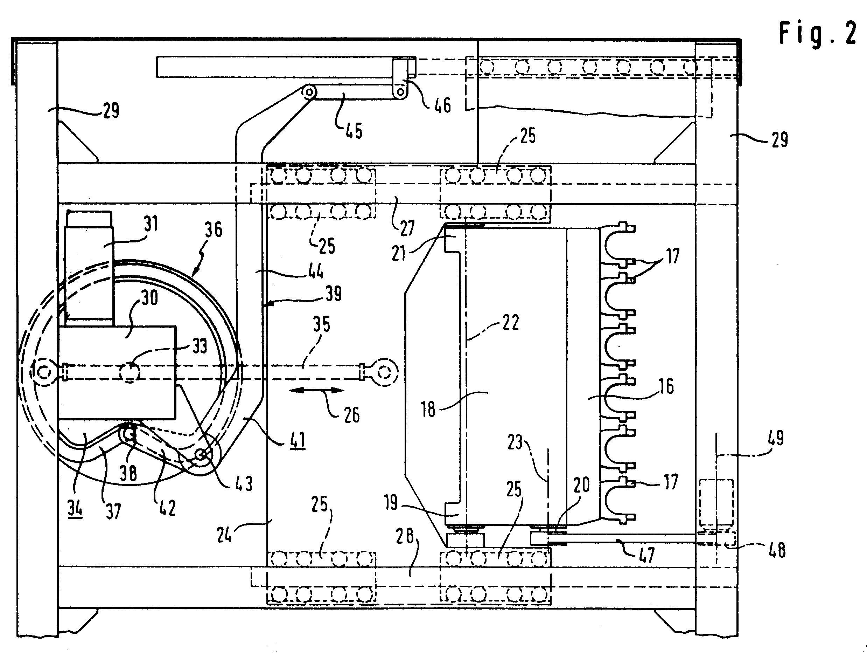

Wie aus Figur 1 ferner hervorgeht, besitzt die Bestückungstür 13 ein Fenster 14, durch das eine mit verschiedenen Werkzeugen 15 bestückte Magazinkammplatte 16 erkennbar ist. Diese Magazinkammplatte 16 ist Bestandteil des in Figur 2 dargestellten ersten Ausführungsbeispieles einer erfindungsgemäßen Vorrichtung zum Wechseln von Werkzeugen.

Wie aus Figur 2 erkennbar ist, ist die Magazinkammplatte 16 mit einer Reihe von Haltegabeln 17 zur Aufnahme der Werkzeuge 15 (vgl. Figur 1) ausgestattet. Diese Haltegabeln 17 bilden den sogenannten Kamm der Magazinkammplatte 16.

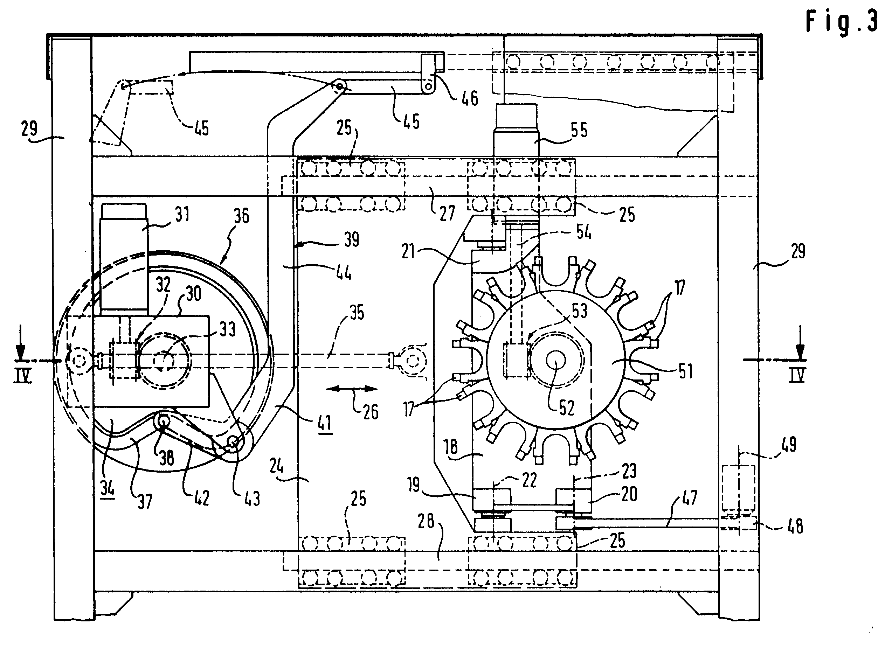

Das in Figur 3 dargestellt zweite Ausführungsbeispiel einer erfindungsgemäßen Vorrichtung zum Wechseln von Werkzeugen entspricht im wesentlichen dem in Figur 2 dargestellten ersten Ausführungsbeispiel. Wie aus Figur 3 erkennbar, ist lediglich anstelle der Magazinkammplatte 16 eine Magazinscheibe 51 vorgesehen, die an ihrem Umfang die Haltegabeln 17 zur Aufnahme der Werkzeuge (in Figur 3 nicht dargestellt) aufweist.

Sowohl die Magazinkammplatte 16 des ersten Ausführungsbeispieles als auch die Magazinscheibe 51 des zweiten Ausführungsbeispieles sind auf einer Schwenkplatte 18 befestigt, welche Lageranordnungen 19, 20 und 21 trägt.

Die Lageranordnungen 19 und 21 sind vertikal übereinander angeordnet und bilden eine gemeinsame Schwenkachse 22. Die Lageranordnung 20 wiederum liegt in einer weiteren Schwenkachse 23, die parallel zur Schwenkachse 22 und im Abstand zu dieser angeordnet ist.

Die Schwenkachse 23 wird im folgenden als vordere Schwenkachse und die Schwenkachse 22 als hintere Schwenkachse bezeichnet.

Über die Lageranordnungen 19 und 21 ist die Schwenkplatte 18 an einem Magazinschlitten 24 um die hintere Schwenkachse 22 schwenkbar befestigt. Der Magazinschlitten 24 wiederum besitzt vier Lagerblöcke 25, über die er über eine parallel zur Achse 60 der Arbeitsspindel 7 verlaufende Geradführung in Richtung des Pfeiles 26 hin- und herverschiebbar ist. Die Geradführung besteht aus zwei vertikal übereinander und etwa parallel zur Achse 60 der Arbeitsspindel 7 verlaufenden Führungsschienen 27 und 28.

Die Führungsschienen 27 und 28 wiederum sind in einem Gestell 29 gelagert, welches u.a. einen Getriebeblock 30 trägt.

Auf dem Getriebeblock 30 ist ein Stellmotor 31 befestigt, der über ein Schneckengetriebe 32 (vgl. Figur 3) eine Antriebswelle 33 antreibt, auf der eine Kurbelscheibe 34 drehfest gelagert ist. An der Kurbelscheibe ist exzentrisch das eine Ende einer Schubstange 35 gelagert, welche mit ihrem anderen Ende am Magazinschlitten 24 angelenkt ist. Die Schubstange 35 bildet zusammen mit der Kurbelscheibe 34, dem Schneckengetriebe 32 und dem Stellmotor 31 einen Kurbeltrieb 36 zur Hin- und Herbewegung des Magazinschlittens 24 in Richtung des Pfeiles 26.

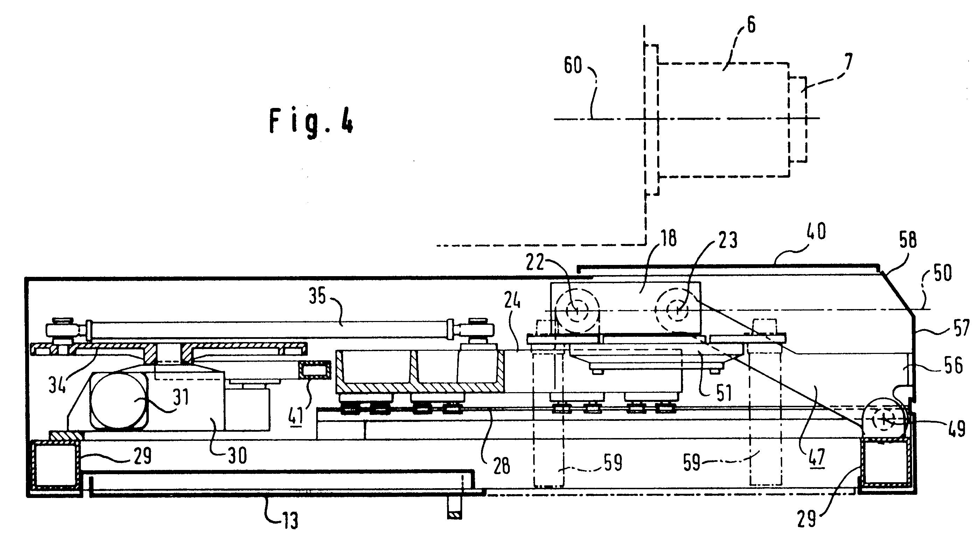

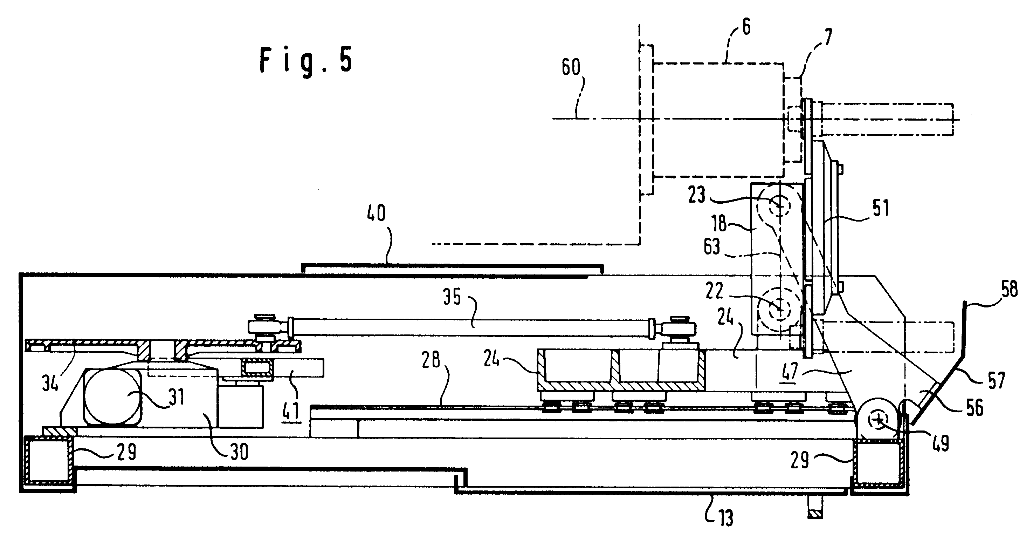

Die Kurbelscheibe 34 ist in ihrem Umfangsbereich mit einer Führungsnut 37 ausgestattet, in die ein Kulissenstein 38 eingreift, der über eine Hebelanordnung 39 auf eine Schutztüre 40 (vgl. Figuren 4 und 5) einwirkt.

Die Hebelanordnung 39 umfaßt im vorliegenden Ausführungsbeispiel einen zweiarmigen Hebel 41, dessen kurzer Hebelarm 42 an seinem freien Ende den Kulissenstein 38 trägt. Der zweiarmige Hebel 41 ist über einen Drehzapfen 43 an dem Gestell 29 gelagert und reicht mit seinem Hebelarm 44 nach oben über die Führungsschiene 27 hinaus. Am freien Ende des Hebelarmes 44 ist ein Zwischenhebel 45 angeordnet, der auf einen Verbindungshebel 46 einwirkt, welcher über eine nicht weiter dargestellte Linearführung mit der Schutztüre 40 verbunden ist.

Die Schwenkplatte 18 ist über die Lageranordnung 20 mit einem Ende eines Schwenkhebels 47 verbunden, dessen anderes Ende am Gestell 29 im Bereich einer Lagerung 48 um eine Drehachse 49 verschwenkbar gelagert ist.

Wie aus Figur 4 hervorgeht, ist die Drehachse 49 des Schwenkhebels 47 auf der der Arbeitsspindel 7 entgegengesetzten Seite einer Ebene 50 angeordnet, welche durch die hintere Schwenkachse 22 und die vordere Schwenkachse 23 der Schwenkplatte 18 definiert ist.

Bei dem in Figur 3 dargestellten zweiten Ausführungsbeispiel ist die Magazinscheibe 51 ist über einen Lagerzapfen 52 auf der Schwenkplatte 18 um eine horizontale Achse drehbar gelagert. Der Lagerzapfen 52 wiederum steht mit einem Schneckengetriebe 53 in Verbindung, welches über eine Welle 54 von einem Stellmotor 55 angetrieben wird.

Wie aus den Figuren 4 und 5 hervorgeht, ist der Schwenkhebel 47 mit einem Flansch 56 ausgestattet, der eine Schutzklappe 57 tragt. Die Anordnung ist dabei derart getroffen, daß die Schutzklappe 57 in der in Figur 4 dargestellten Ausgangsstellung mit ihrem freien Ende 58 an das vordere Ende der Schutztüre 40 anschließt.

Durch die Schutztüre 40 und die Schutzklappe 57 ist die nach dem erfindungsgemäßen Verfahren arbeitende Vorrichtung zum Wechseln der Werkzeuge gegenüber dem Arbeitsraum 9 der Dreiachseinheit abgeschlossen.

Wie aus Figur 4 ferner hervorgeht, ist in der Ausgangsstellung die Bestückungstüre 13 offen. Eine Bedienungsperson kann daher ohne weiteres neue Werkzeuge 59 in die Magazinscheibe 51 (oder die Magazinkammplatte 16) einsetzen. Der Zugang zum Arbeitsraum der Dreiachseinheit ist in dieser Phase durch die Schutztüre 40 und die Schutzklappe 57 abgesperrt.

Sobald die Bestückungstüre (13) durch die Bedienungsperson geschlossen wird, wird dies über einen nicht dargestellten Schalter einer Kontrolleinheit gemeldet, welche die Vorrichtung für den Wechselvorgang freigibt. Wird dann in der Arbeitsspindel 7 ein Werkzeug benötigt, fährt der Fahrständer 3 auf der Führung 4 zurück, und der Stellmotor 31 (für den Kurbeltrieb 36) erhält ein Signal. Über das Signal wird der Stellmotor 31 in Betrieb gesetzt, wodurch über das Schneckengetriebe 32 die Kurbelscheibe 34 in Drehung versetzt wird. Durch die Drehung der Kurbelscheibe 34 wird die Schubstange 35 aus der in den Figuren 2, 3 und 4 dargestellten Ausgangsstellung ausgeschoben, wodurch der Magazinschlitten 24 in die in Figur 5 dargestellte Stellung nach rechts verfährt. Im Verlaufe dieser Verschiebebewegung laufen die folgenden Vorgänge ab.

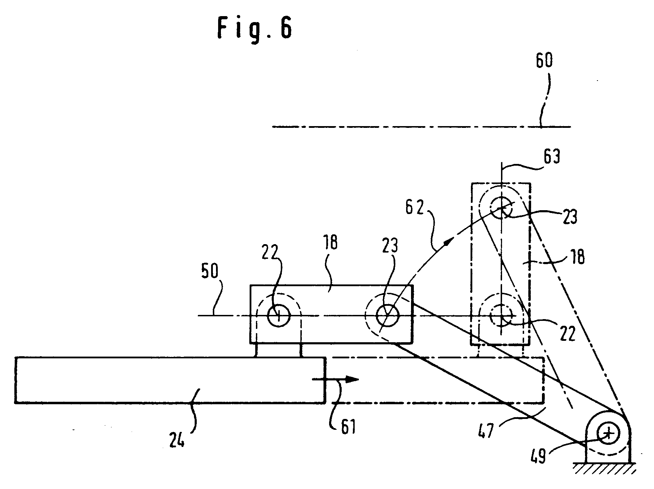

So wird zum einen über die Führungsnut 37 der Kulissenstein 38 ausgelenkt und über die Hebelanordnung 39 und den Zwischenhebel 45 die Schutztüre 40 in die in Figur 5 dargestellte Stellung zurückgezogen, d.h. der Durchgang zum Arbeitsraum geöffnet. Zum anderen wird im Verlaufe der Verschiebebewegung des Magazinschlittens 24 die Schwenkplatte 18 aus der in Figur 4 dargestellten Ausgangsstellung in die in Figur 5 dargestellte Wechselstellung verschwenkt. Der Ablauf dieser Verschwenkbewegung der Schwenkplatte 18 ist aus Figur 6 ersichtlich, die die wichtigsten Elemente der Schwenkanordnung in vereinfachter Darstellung zeigt. Wird nämlich der Magazinschlitten 24 in Richtung des Pfeiles 61 verschoben, so bleibt die hintere Schwenkachse 22 der Schwenkplatte 18 in der Ebene 50. Die hintere Schwenkachse 22 beschreibt somit eine geradlinige, parallel zur Achse 60 der Arbeitsspindel 7 verlaufende Bewegung.

Da die vordere Achse 23 der Schwenkplatte 18 an dem Schwenkhebel 47 angelenkt ist, der am Gestell 29 um die Drehachse 49 verschwenkbar ist, beschreibt die vordere Schwenkachse 23 bei einem Verschieben des Magazinschlittens 24 in Richtung des Pfeiles 61 einen Bogen, wie er in Figur 6 mit dem Pfeil 62 angedeutet ist. Damit wird die Schwenkplatte 18 aus der in Figur 6 mit ausgezogenen Linien dargestellten Ausgangslage in die in Figur 6 mit strichpunktierten Linien dargestellte Wechselstellung verschwenkt. In dieser Wechselstellung befinden sich die hintere Schwenkachse 22 und die vordere Schwenkachse 23 in einer Ebene 63, die senkrecht zur Achse 60 der Arbeitsspindel 7 ausgerichtet ist.

Wie bereits erwähnt, trägt die Schwenkplatte 18 beim ersten Ausführungsbeispiel die Magazinkammplatte 16 (Figur 2) und beim zweiten Ausführungsbeispiel die Magazinscheibe 51 (Figur 3). Somit wird die Magazinkammplatte 16 bzw. die Magazinscheibe 51 von ihrer Ausgangsstellung seitlich neben dem Fahrständer (vgl. Figur 4) in die Wechselstellung verschwenkt, wie dies in Figur 5 dargestellt ist. In dieser Wechselstellung kann dann die Arbeitsspindel 7 im Pick-up-Verfahren das gebrauchte Werkzeug in die Magazinkammplatte 16 bzw. die Magazinscheibe 15 ablegen und ein neues Werkzeug aus der Magazinkammplatte 16 bzw. der Magazinscheibe 51 entnehmen.

Wie bereits erläutert, wird durch den Kurbeltrieb 36 bei der Verschwenkbewegung der Magazinscheibe 24 die Schutztüre 40 in die in Figur 5 dargestellte geöffnete Stellung verschoben und damit die Verschwenkbewegung der Magazinkammplatte 16 bzw. der Magazinscheibe 51 in den Arbeitsraum hinein ermöglicht. Parallel hierzu öffnet sich auch die Schutzklappe 57, die aufgrund ihrer Befestigung am Flansch 56 aus der in Figur 4 dargestellten geschlossenen Stellung in die in Figur 5 dargestellte offene Stellung verschwenkt.

Durch das Zurückziehen der Schubstange 35 über den Kurbeltrieb 36 in die in den Figuren 2, 3 und 4 dargestellte Stellung wird die Schwenkplatte 18 und damit die Magazinkammplatte 16 bzw. die Magazinscheibe 51 wieder in ihre Ausgangsstellung seitlich neben dem Fahrständer zurückgeschwenkt. Gleichzeitig werden sowohl die Schutztüre 40 als auch die Schutzklappe 57 aufgrund der im vorangegangenen beschriebenen Zusammenhänge wieder geschlossen und damit der Arbeitsraum der Dreiachseinheit gegenüber der Vorrichtung zum Wechseln der Werkzeuge geschlossen.

Erst wenn alle Elemente der Schwenkanordnung diese Ausgangsstellung erreicht haben, kann die Schutztüre 13 wieder geöffnet werden.

## Patentansprüche

1. Verfahren zum Wechseln von Werkzeugen an einer Einspindelwerkzeugmaschine, insbesondere zum Einsatz an einer Transfermaschine, bei dem die neuen Werkzeuge (15) in einem seitlich dicht neben dem die Arbeitsspindel (7) tragenden Fahrständer (3) der Werkzeugmaschine (1) angeordneten Werkzeugmagazin (16, 51) mit etwa senkrecht zur Spindelachse (60) ausgerichteter Werkzeugachse in horizontaler Lage gehalten, aus dieser Position heraus in die Spindel (7) eingesetzt und nach erfolgtem Bearbeitungseinsatz als gebrauchte Werkzeuge wieder in dem Werkzeugmagazin (16, 51) abgelegt werden,
dadurch **gekennzeichnet,** daß
das Werkzeugmagazin (16, 51) aus seiner Stellung seitlich neben dem Fahrständer (3) in eine Wechselstellung vor der Arbeitsspindel (7) verschwenkt und im Pick-up-Verfahren durch die Arbeitsspindel (7) unmittelbar das neue Werkzeug (15) aus dem Werkzeugmagazin (16, 51) entnommen bzw. das gebrauchte Werkzeug in das Werkzeugmagazin (16, 51) abgelegt wird.

2. Verfahren nach Anspruch 1,
dadurch **gekennzeichnet,** daß
das Werkzeugmagazin (16, 51) aus seiner Stellung seitlich neben dem Fahrständer (3) in die Wechselstellung vor der Arbeitsspindel (7) um zwei im Abstand voneinander angeordnete, vertikal ausgerichtete Achsen (22, 23) verschwenkt wird, welche in der Stellung seitlich neben dem Fahrständer (3) in einer zur Spindelachse (60) etwa parallelen und in der Wechselstellung in einer zur Spindelachse (60) senkrechten, jeweils vertikalen Ebene verlaufen.

3. Verfahren nach Anspruch 2,
dadurch **gekennzeichnet**, daß
bei der Verschwenkbewegung in Richtung der Wechselstellung die hintere Schwenkachse (22) des Werkzeugmagazines eine geradlinige, etwa parallel zur Spindelachse verlaufende Bewegung (50) und die vordere Schwenkachse (23) eine bogenförmige Bewegung (62) beschreibt.

4. Verfahren nach Anspruch 3,
dadurch **gekennzeichnet,** daß
die bogenförmige Bewegung (62) der vorderen Schwenkachse (23) auf einem Kreisbogen verläuft, dessen Mittelpunkt (49) auf der der Arbeitsspindel (7) entgegengesetzten Seite einer Ebene (50) liegt, die durch die Bewegungsachsen (22, 23) in deren Stellung seitlich neben dem Fahrständer (3) definiert ist.

5. Einspindelwerkzeugmaschine zur Durchführung des Verfahrens nach Anspruch 1, die mit einem seitlich dicht neben einem die Arbeitspindel (7) tragenden Fahrständer (3) der Werkzeugmaschine (1) angeordneten Werkzeugmagazin versehen ist, das die neuen Werkzeuge (15) mit etwa senkrecht zur Spindelachse (60) ausgerichteter Werkzeugachse in horizontaler Lage hält, dadurch gekennzeichnet, daß die Maschine mit einer Schwenkanordnung versehen ist, mit der das Werkzeugmagazin aus der seitlich dicht neben dem Fahrständer (3) angeordneten Stellung in eine Wechselstellung vor der Arbeitsspindel (7) und zurück verschwenkbar ist.

6. Einspindelwerkzeugmaschine nach Anspruch 5, zur Durchführung des Verfahrens nach Anspruch 2,
dadurch **gekennzeichnet,** daß
die Schwenkanordnung eine das Werkzeugmagazin tragende Schwenkplatte (18) umfaßt, die Lageranordnungen (19, 20, 21) für die im Abstand voneinander angeordneten, vertikal ausgerichteten Schwenkachsen (22, 23) aufweist, die jeweils mit einer Führungsanordnung in Verbindung stehen.

7. Einspindelwerkzeugmaschine nach Anspruch 6, zur Durchführung des Verfahrens nach Anspruch 3,
dadurch **gekennzeichnet,** daß
die Schwenkplatte (18) mit ihrer hinteren Lageranordnung (19, 21) für die hintere Schwenkachse (22) in einem Magazinschlitten (24) gelagert ist, der auf einer etwa parallel zur Spindelachse (60) ausgerichteten Linearführung horizontal hin- und herverschiebbar ist und daß die vordere Lageranordnung (20) für die vordere Schwenkachse (23) an das eine Ende eines Schwenkhebels (47) angekoppelt ist, dessen anderes Ende gestellfest auf der der Arbeitsspindel (7) entgegengesetzten Seite einer Ebene (50) gelagert ist, die durch die Schwenkachsen (22, 23) in deren Stellung seitlich neben dem Fahrständer (3) definiert ist.

8. Einspindelwerkzeugmaschine nach Anspruch 7,
dadurch **gekennzeichnet,** daß
die Drehachse (49) der Lagerung (48) des anderen Endes des Schwenkhebels (47) in einer vertikalen Ebene liegt, die durch die Winkelhalbierende derjenigen beiden Ebenen (50, 63) verläuft, die durch die Schwenkachsen (22, 23) zum einen in der Stellung seitlich neben dem Fahrständer (3) und zum anderen in der Wechselstellung gebildet werden.

9. Einspindelwerkzeugmaschine nach Anspruch 6 oder 7,
dadurch **gekennzeichnet,** daß
das Werkzeugmagazin als Magazinscheibe (51) ausgebildet ist, die an der Schwenkplatte (18) um eine horizontale Achse drehbar gelagert ist.

10. Einspindelwerkzeugmaschine nach Anspruch 6 oder 7,
dadurch **gekennzeichnet,** daß
das Werkzeugmagazin als Magazinkammplatte (16) ausgebildet ist, die an der Schwenkplatte (18) befestigt ist.

11. Einspindelwerkzeugmaschine nach Anspruch 7,
dadurch **gekennzeichnet,** daß
der Magazinschlitten (24) über einen Kurbeltrieb (36) horizontal hin- und herverschiebbar ist.

12. Einspindelwerkzeugmaschine nach Anspruch 11,
dadurch **gekennzeichnet,** daß
der Kurbeltrieb (36) eine Schubstange (35) umfaßt, die mit ihrem einen Ende an dem Magazinschlitten und mit ihrem anderen Ende an einer über einen Stellmotor (31) angetriebenen Kurbelscheibe (34) angelenkt ist.

13. Einspindelwerkzeugmaschine nach Anspruch 12,
dadurch **gekennzeichnet,** daß
die Kurbelscheibe (34) als mit mindestens einer Führungsnut (37) ausgestattete Kurvenscheibe ausgebildet ist.

14. Einspindelwerkzeugmaschine nach Anspruch 13,
dadurch **gekennzeichnet,** daß
in die Führungsnut (37) ein Kulissenstein (38) eingreift, der über eine Hebelanordnung (39) auf eine oder mehrere Schutzeinrichtungen, wie Schutztüren (40) oder Schutzklappen oder dergleichen einwirkt.

15. Einspindelwerkzeugmaschine nach Anspruch 7,
dadurch **gekennzeichnet,** daß
die Linearführung zwei vertikal übereinander und etwa parallel zur Spindelachse (60) verlaufende Führungsschienen (27, 28) aufweist, auf denen Lagerblöcke (25) verschiebbar sind, die an der Schwenkplatte (18) befestigt sind.

## Claims

1. Method for changing tools on a single-spindle machine tool, in particular for use on a transfer machine, in which the new tools (15) are held in a horizontal position in a tool magazine (16, 51) arranged laterally close beside the travelling column (3) of the machine tool (1) carrying the work spindle (7), with the tool axis oriented more or less perpendicularly to the spindle axis (60), inserted in the spindle (7) from this position and, after being used for machining, deposited back in the tool magazine (16, 51) as used tools, characterised in that the tool magazine (16, 51) is pivoted out of its position laterally beside the travelling column (3) into a changing position in front of the work spindle (7), and by the pick-up method the new tool (15) is taken directly out of the tool magazine (16, 51) by the work spindle (7) or the used tool is deposited in the tool magazine (16, 51).

2. Method according to claim 1, characterised in that the tool magazine (16, 51) is pivoted out of its position laterally beside the travelling column (3) into the changing position in front of the work spindle (7) about two spaced-apart, vertically oriented shafts (22, 23) which in the position laterally beside the travelling column (3) extend in a vertical plane more or less parallel to the spindle axis (60) and in the changing position extend in a vertical plane perpendicular to the spindle axis (60).

3. Method according to claim 2, characterised in that during the pivot movement in the direction of the changing position, the rear pivot shaft (22) of the tool magazine describes a rectilinear movement (50) extending more or less parallel to the spindle axis and the front pivot shaft (23) describes an arcuate movement (62).

4. Method according to claim 3, characterised in that the arcuate movement (62) of the front pivot shaft (23) extends in an arc of which the centre (49) lies on the side opposite the work spindle (7) of a plane (50) which is defined by the axes of movement (22, 23) in their position laterally beside the travelling column (3).

5. Single-spindle machine tool for carrying out the method according to claim 1, which is provided with a tool magazine which is arranged laterally close beside a travelling column (3) of the machine tool (1) carrying the work spindle (7) and which holds the new tools (15) in a horizontal position with the tool axis oriented more or less perpendicularly to the spindle axis (60), characterised in that the machine is provided with a pivot assembly with which the tool magazine can be pivoted out of the position arranged laterally close beside the travelling column (3) into the changing position in front of the work spindle (7) and back.

6. Single-spindle machine tool according to claim 5 for carrying out the method according to claim 2, characterised in that the pivot assembly includes a pivot plate (18) which carries the tool magazine and which comprises bearing assemblies (19, 20, 21) for the spaced-apart, vertically oriented pivot shafts (22, 23) which are in each case connected to a guide assembly.

7. Single-spindle machine tool according to claim 6 for carrying out the method according to claim 3, characterised in that the pivot plate (18) with its rear bearing assembly (19, 21) for the rear pivot shaft (22) is mounted in a magazine carriage (24) which is horizontally reciprocatable on a linear guide oriented more or less parallel to the spindle axis (60), and in that the front bearing assembly (20) for the front pivot shaft (23) is coupled to one end of a pivot lever (47) of which the other end, fixed to the frame, is mounted on the side opposite the work spindle (7) of a plane (50) which is defined by the pivot shafts (22, 23) in their position laterally beside the travelling column (3).

8. Single-spindle machine tool according to claim 7, characterised in that the axis of rotation (49) of the bearing (48) of the other end of the pivot lever (47) is located in a vertical plane which passes through the bisecting line of the two planes (50, 63) which are formed by the pivot shafts (22, 23) firstly in the position laterally beside the travelling column (3) and secondly in the changing position.

9. Single-spindle machine tool according to claim 6 or 7, characterised in that the tool magazine is designed as a magazine disc (51) which is mounted on the pivot plate (18) so as to be rotatable about a horizontal axis.

10. Single-spindle machine tool according to claim 6 or 7, characterised in that the tool magazine is designed as a magazine comb plate (16) which is attached to the pivot plate (18).

11. Single-spindle machine tool according to claim 7, characterised in that the magazine carriage (24) is horizontally reciprocatable by a crank drive (36).

12. Single-spindle machine tool according to claim 11, characterised in that the crank drive (36) includes a connecting rod (35) which is linked by one end to the magazine carriage and by its other end to a crank disc (34) driven by a servo motor (31).

13. Single-spindle machine tool according to claim 12, characterised in that the crank disc (34) is designed as a cam disc provided with at least one guide groove (37).

14. Single-spindle machine tool according to claim 13, characterised in that a sliding block (38) which acts via a lever assembly (39) on one or more protective devices such as protective doors (40) or protective flaps or the like can engage in the guide groove (37).

15. Single-spindle machine tool according to claim 7, characterised in that the linear guide comprises two guide rails (27, 28) which extend vertically one above the other and more or less parallel to the spindle axis (60) and on which bearing blocks (25) which are attached to the pivot plate (18) are slidable.

## Revendications

1. Procédé pour le changement d'outils sur une machine-outil monobroche, en particulier pour être utilisé sur une machine transfert, procédé dans lequel les outils neufs (15) sont maintenus en position horizontale dans un magasin à outils (16, 51) disposé latéralement tout près à côté du support déplaçable (3), portant la broche de travail (7), de la machine-outil (1), l'axe d'outil étant orienté à peu près perpendiculairement par rapport à l'axe de broche, à partir de cette position sont insérés dans la broche (7) puis, une fois l'utilisation pour usinage effectuée, sont déposés de nouveau dans le magasin à outils (16, 51), à titre d'outils usagés,
caractérisé en ce que le magasin à outils (16, 51) est pivoté, depuis sa position latéralement à côté du support déplaçable (3), dans une position de remplacement située devant la broche de travail (7), et l'outil neuf (15) est directement prélevé du magasin à outils (16, 51) lors d'un processus de déplacement, au moyen de la broche de travail (7), respectivement l'outil usagé est déposé dans le magasin à outils (16, 51).

2. Procédé selon la revendication 1,
caractérisé en ce que le magasin à outils (16, 51) est pivoté depuis sa position latéralement à côté du support déplaçable (3) dans la position de remplacement devant la broche de travail (7), le pivotement s'effectuant autour de deux axes (22, 23) orientés verticalement et disposés à distance l'un de l'autre et qui, dans la position latéralement à côté du support déplacable (3), s'étendent dans un plan qui est à peu près parallèle à l'axe de broche (60) et, dans la position de remplacement, s'étendent dans un plan respectif vertical, perpendiculaire par rapport à l'axe de broche (60).

3. Procédé selon la revendication 2,
caractérisé en ce que, lors du mouvement de pivotement en direction de la position de remplacement, l'axe de pivotement (22) arrière du magasin à outils décrit un déplacement (50) rectiligne s'étendant à peu près parallèlement par rapport à l'axe de broche et l'axe de pivotement avant (23) décrit un déplacement arqué (62).

4. Procédé selon la revendication 3,
caractérisé en ce que le déplacement arqué (62) de l'axe de pivotement avant (23) s'étend sur un arc de cercle dont le centre est situé sur la face, opposée à la broche de travail (7), d'un plan (50) défini par les axes de déplacement (22, 23) lorsqu'ils sont dans leur position latéralement à côté du support déplacable (3).

5. Machine-outil monobroche, pour mettre en oeuvre le procédé selon la revendication 1, pourvue d'un magasin à outils disposé latéralement près et à côté d'un support déplaçable (3), portant la broche de travail (7), de la machine-outil (1), magasin contenant en position horizontale les outils neufs (15), leur axe d'outils étant orienté sensiblement perpendiculairement par rapport à l'axe de broche (60), caractérisée en ce que la machine est pourvue d'un dispositif de pivotement à l'aide duquel le magasin à outils peut être pivoté, depuis la position disposée latéralement près et à côté du support déplaçable (3), en une position de remplacement située devant la broche de travail (7), et être soumis à un pivotement de retour inverse.

6. Machine-outil monobroche selon la revendication 5, pour mettre en oeuvre le procédé selon la revendication 2,
caractérisée en ce que le dispositif de pivotement comprend une plaque de pivotement (18) portant le magasin à outils et présentant des dispositifs de tourillonnement (19, 20, 21) pour les axes de pivotement (22, 23) orientés verticalement et disposés à distance les uns des autres, axes de pivotement (22, 23) reliés chacun à un dispositif de guidage.

7. Machine-outil monobroche selon la revendication 6 pour mettre en oeuvre le procédé selon la revendication 3,
caractérisée en ce que la plaque de pivotement (18) est montée, avec son dispositif de tourillonnement (19, 21) arrière destiné à l'axe de pivotement arrière (22), dans un chariot à magasin (24) qui est déplaçable dans un sens et dans l'autre horizontalement sur un guidage linéaire orienté à peu près parallèlement par rapport à l'axe de broche (60) et en ce que le dispositif de tourillonnement avant (20) destiné à l'axe de pivotement (23) est accouplé à une extrémité d'un levier pivotant (47), dont l'autre extrémité est fixée sur le bâti, du côté, opposé à la broche de travail (7), d'un plan (50) défini par les axes de pivotement (22, 23), dans leur position située latéralement à côté du support déplaçable (3).

8. Machine-outil monobroche selon la revendication 7,
caractérisée en ce que l'axe de rotation (49) du palier de tourillonnement (48) de l'autre extrémité du levier pivotant (47) est situé dans un plan vertical qui passe par les bissectrices des deux plans (50, 63) qui sont constitués par l'axe de pivotement (22, 23), d'une part, lorsqu'ils se trouvent dans la position latéralement à côté du support déplaçable (3) et, d'autre part, dans la position de remplacement.

9. Machine-outil monobroche selon la revendication 6 ou 7,
caractérisée en ce que le magasin à outils est réalisé sous forme de disque magasin (51), monté à rotation autour d'un axe horizontal, sur la plaque de pivotement (18).

10. Machine-outil monobroche selon la revendication 6 ou 7,
caractérisée en ce que le magasin à outils est réalisé sous forme de plaque à magasin en peigne (16), fixée sur la plaque pivotante (18).

11. Machine-outil monobroche selon la revendication 7,
caractérisée en ce que le chariot à magasin (24) est déplaçable dans un sens et dans l'autre horizontalement par l'intermédiaire d'un mécanisme à bielle-manivelle (36).

12. Machine-outil monobroche selon la revendication 11,
caractérisée en ce que le mécanisme à bielle-manivelle (36) comprend une bielle (35) articulée à une de ses extrémités sur le chariot de magasin et à son autre extrémité sur le disque de manivelle (34) entraîné par l'intermédiaire d'un servomoteur (31).

13. Machine-outil monobroche selon la revendication 12,
caractérisée en ce que le disque de manivelle (34) est réalisé sous forme de disque de came équipé d'au moins une rainure de guidage (37).

14. Machine-outil monobroche selon la revendication 13,
caractérisée en ce qu'un patin de coulisse (38), agissant par l'intermédiaire d'un dispositif à levier (39) sur un ou plusieurs dispositifs de protection, tels que des portes de protection (40) ou des volets de protection ou analogues, s'engage dans la rainure de guidage (37).

15. Machine-outil monobroche selon la revendication 7,
caractérisée en ce que le guidage linéaire présente deux glissières de guidage (27, 28) disposées verticalement l'une au-dessus de l'autre et s'étendant à peu près parallèlement par rapport à l'axe de broche (60), glissières de guidage (27, 28) sur lesquelles des blocs de palier (25), fixés à la plaque de pivotement (18), peuvent être déplacés.
